(19) Europäisches Patentamt
European Patent Office
Office européen des brevets

(11) **EP 1 177 879 B1**

(12) **EUROPÄISCHE PATENTSCHRIFT**

(45) Veröffentlichungstag und Bekanntmachung des Hinweises auf die Patenterteilung:
**01.04.2009 Patentblatt 2009/14**

(51) Int Cl.:
***B29C 63/04*** *(2006.01)*     ***F16L 59/02*** *(2006.01)*
***F16L 59/06*** *(2006.01)*

(21) Anmeldenummer: **01118516.2**

(22) Anmeldetag: **01.08.2001**

(54) **Folienumhüllter, evakuierter Wärmedämmkörper und Herstellungsverfahren für diesen**

Thermal insulating body, foil-wrapped under vacuum, and production process therefor

Corps thermoisolant conditionné sous vide et procédé d'obtention

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **03.08.2000 DE 10038584**
               **24.11.2000 DE 10058566**

(43) Veröffentlichungstag der Anmeldung:
**06.02.2002 Patentblatt 2002/06**

(73) Patentinhaber: **va-Q-tec AG**
**97070 Würzburg (DE)**

(72) Erfinder: **Ehrmanntraut, Michael**
**97070 Würzburg (DE)**

(74) Vertreter: **Küchler, Stefan**
**Patentanwalt**
**Postfach 11 93 40**
**90103 Nürnberg (DE)**

(56) Entgegenhaltungen:
**WO-A-98/29309**         **GB-A- 2 336 565**

**Beschreibung**

Die Erfindung richtet sich auf einen ebenflächig berandeten, im allgemeinen prismatischen, insbesondere quader- und/oder plattenförmigen, von einer gasdichten Folie umhüllten und evakuierten Wärmedämmkörper sowie auf ein Verfahren zu dessen Herstellung.

Eine hochwertige Wärmedämmung wird auf den vielfältigsten Anwendungsgebieten benötigt. Neben der Versendung von gekühlten, medizinischen Proben, Organen etc. in eigens zu diesem Zweck hergestellten oder herstellbaren Behältern ist vor allem auch die Anwendung bei der Wärmeisolation von Gebäuden von großer Bedeutung, da bei einer guten Wärmedämmung der Primärenergiebedarf deutlich reduziert werden kann, was eine wichtige Maßnahme zur Kompensierung der ständig steigenden Heizölpreise darstellt. Eine Randbedingung bei all diesen, aber auch bei weiteren Anwendungsfällen ist, dass hierfür verwendbare Wärmedämmkörper ein möglichst kleines Volumen haben sollen, was aus den vielfältigsten, insbesondere ästhetischen und praktikablen Gesichtspunkten folgt. Die Verwendung von Styroporplatten bspw. vermag zwar an Gebäudeaußenwänden die Wärmeverluste zu reduzieren, jedoch nicht in dem gewünschten Umfang, da hierzu die übliche Plattenstärke von bspw. 5 cm nicht ausreichend ist. Bei Wärmeisolationsbehältern, in denen Objekte während eines mehrtägigen Transportes gekühlt aufbewahrt werden müssen, wurde daher bereits die Verwendung von Vakuumisolationspanelen vorgeschlagen. Derartige Panele bestehen aus einem porösen Kern, der von einer gasdichten Folie umhüllt und sodann stark evakuiert ist. Durch Absaugen der Luft aus den Poren wird ein hoher Anteil des potentiellen Wärmeübertragungsmediums entfernt, und ein Wärmeverlust kann allenfalls durch Wärmeleitung innerhalb des Kerngerüstes vonstatten gehen. Ein wichtiger Faktor für die Schaffung und langfristige Einhaltung eines möglichst niedrigen Wärmeleitungskoeffizienten ist dabei neben der Auswahl eines möglichst gut isolierenden Kernwerkstoffs auch eine möglichst hundertprozentig gasdichte Umhüllung, so dass das Vakuum im Inneren eines derartigen Isolationspaneels über einen möglichst langen Zeitraum - bei Anwendungen im Baubereich bspw. über 50 einen möglichst langen Zeitraum - bei Anwendungen im Baubereich bspw. über 50 oder mehr Jahre - aufrechterhalten bleibt. Hierbei ist zu bedenken, dass derartige Folienumhüllungen zumeist aus einem Kunststoffsubstrat bestehen, das an einer Seite eine versiegelbare Beschichtung und an der anderen Seite eine gasdichte Metallisierung aufweist. Während das Foliensubstrat elastisch und daher mehr oder weniger dehnbar ist, kann die meist nur einige Nanometer starke Metallisierungsschicht stärkere Dehnungen oder sonstige Verformungen nicht nachvollziehen und bekommt solchenfalls mit bloßem Auge nicht erkennbare Mikrorisse, welche jedoch die Dauer des inneren Vakuums erheblich reduzieren und daher das Wärmeisolationsvermögen vorzeitig auf viel zu niedrige Werte begrenzen. Im Rahmen des Herstellungsverfahrens für derartige Vakuumisolationspaneele wird aus zwei deckungsgleichen und mit ihren versiegelbaren Innenflächen aneinandergelegten Folienzuschnitten mittels einer randseitigen, U-förmig verlaufenden Versiegelung entlang von drei der vier Außenkanten eine Tasche hergestellt, in welche sodann der plattenförmige Kern eingeschoben wird. Dadurch werden die zunächst aneinanderliegenden Folienzuschnitte auseinandergedrückt, was insbesondere in den versiegelten Eckbereichen zu einem erhöhten Streß für die Folie führt, die an diesen Stellen zu einer stärkeren Verformung gezwungen wird. Anschließend wird die noch offene Taschenseite innerhalb eines evakuierten Gefäßes versiegelt. Das solchermaßen gebildete Vakuumisolationspanel weist sodann einen durch die Stärke des Kerns definierten Mittelbereich auf und einen Randbereich, der sich durch die ebenen und aneinander liegenden und sich radial nach außen erstreckenden Schweißlaschen der beiden aufeinanderliegenden Folien ergibt. Diese sich nach außen erstreckenden Laschen stören bei dem stirnseitigen Aneinanderfügen mehrerer derartiger Vakuumisolationspanele erheblich, da sie infolge der hier doppelten Folienstärke sehr steif sind und sich daher allenfalls insgesamt umknicken lassen. Dieses Umknicken kann jedoch nur mit größtem Streß für die Folien durchgeführt werden, und die Ecken erfordern gar ein mehrfaches Umknicken, um den überschüssigen Folienbereich nach innen zu falten. Dieses Umknicken führt daher fast immer zu einer Verletzung der Metallisierungsschicht und damit zu dem oben beschriebenen Effekt einer starken Herabsetzung der Betriebsdauer hoher Wärmeisolationsfähigkeit.

Die Veröffentlichung WO 98/29309 offenbart ein Vakuumisolationspaneel aus einem festen, mikroporösen Plastikschaum; der Kern weist nutenförmige Vertiefungen auf und ist in einer Tasche aus einem flexiblen, gasundurchlässigen Barrierefilm aufgenommen. Zur Evakuierung ist an der Tasche ein schlauchförmiger Ansatz zum Ankoppeln an eine Vakuumpumpe vorgesehen. Da hierbei vor dem Umhüllen des Kerns zwei aneinander liegende, etwa deckungsgleiche Folien an drei umlaufenden Kanten zu einer Tasche zusammengeschweißt sind, und die vierte Kante unmittelbar nach Einschieben des Kerns ebenfalls von Ecke zu Ecke verschweißt wird, stoßen schließlich an allen vier Eckbereichen jeweils zwei Schweißnähte zusammen. Diese Eckbereiche sind durch die miteinander versiegelten Folien sehr steif und können nicht streßfrei umgefaltet werden. Versucht man dies dennoch, so erhält die Barrierefolie Risse, wodurch sich das Vakuum allmählich reduziert und damit auch die thermische Isolationsfähigkeit.

Das Dokument GB 2 336 565 A betrifft ein Vakuumisolationspaneel, umfassend einen Kern aus einem thermisch isolierenden Material, mit einander gegenüber liegenden Hauptflächen sowie diese verbindenden Stirnflächen, wobei der Kern von einer versiegelten und evakuierten Hülle umgeben ist, welche aus einem Laminat besteht mit einer Mehrzahl von Lagen, und wobei wenigstens eine der Lagen sich nicht über das gesamte Laminat erstreckt, sondern diskontinuierlich ist. Hierbei wird eine Tasche aus einer einzigen Folie gebildet, welche ein- oder zweimal umgefaltet ist, so dass an einer Kante oder zwei Kanten anstelle einer Foliennaht eine Biegelinie entlangläuft. Eine verbleibende Längsnaht kann entweder entlang einer Stirnseite oder entlang einer Hauptfläche des Kerns verlaufen. Jedoch werden auch bei diesem Dokument die beiden verbleibenden Öffnungen an den Stirnseiten flach aneinander laminiert bzw. versiegelt. Diese an zwei Stirnseiten verbleibende Siegelnähte werden offensichtlich nicht umgefaltet; überdies ist eine Maßnahme zum streßfreien Umfalten solcher Siegelnähte nicht erkennbar, so dass bei dem Versuch, diese Siegelnähte bei Bedarf an den Kern heranzufalten, eine Rißbildung in der Folie und damit eine Herabsetzung des Vakuums und der thermischen Isolationsfähigkeit unvermeidlich ist.

Aus den Nachteilen des beschriebenen Stands der Technik resultiert das die Erfindung initiierende Problem, gattungsgemäße Wärmedämmkörper derart auszubilden, dass diese lückenlos aneinander gesetzt werden können, mit vorzugsweise stumpf aneinander grenzenden Stirnseiten, so dass eine größere Fläche bspw. an Bauwerken lückenlos mit derartigen Wärmedämmkörpern belegt werden kann, und gleichzeitig soll während des Herstellungsverfahrens darauf geachtet werden, dass die Umhüllungsfolie möglichst keiner Zugbelastung ausgesetzt wird, damit die nur einige Nanometer dicke, metallische Diffusionsbarriereschicht der Folie nicht aufreißen kann.

Die Lösung dieses Problems gelingt im Rahmen eines gattungsgemäßen Verfahrens mittels der im Anspruch 1 zusammengestellten Schritte. Die Erfindung wendet sich demgemäß ab von dem Verfahren der Bildung einer Folientasche, in die der Kern mit einer Stirnseite und mit seinem gesamten Mantel bisher eingeschoben wird. Stattdessen wird zunächst ein Kern mit der gewünschten Form des Wärmedämmkörpers hergestellt, und sodann wird dieser von einem einzigen, zunächst ebenen Folienzuschnitt sukzessive eingehüllt. Hierbei wird der Kern zunächst in einem Umfangs- oder Mantelbereich vollständig von der Folie umgeben und diese sodann zu einer etwa schlauchförmigen, an dem Kernumfang anliegenden Gestalt zusammengeschweißt, die noch zwei Öffnungen im Bereich der End- oder Stirnseiten des Wärmedämmkörpers aufweist. Vor dem weiteren Versiegeln dieser Stirnseiten werden die überstehenden Folienbereiche durch geeignete Faltungen zunächst vollständig an die betreffenden End- oder Stirnseiten des Kerns herangefaltet, so dass sie eine vollflächige Abstützung erfahren, wobei infolge der ebenflächigen Berandung des Kerns sowie möglichst scharfer Kanten desselben im Idealfall keinerlei Wölbungen der Folie auftreten; diese kann vielmehr entlang von Kanten gefaltet werden und erfährt daher sowohl bei dieser Faltung als auch bei dem anschließenden Evakuieren nirgendwo eine die Funktion der metallischen Diffusionsbarriereschicht gefährdende Zugbelastung. Da das Foliensubstrat selbst nur wenige Mikrometer stark ist, sind die Verformungen an den Faltkanten derart gering, dass die metallische Beschichtung diese ohne weiteres nachvollziehen kann. Nach der stirnseitigen Versiegelung verbleibt eine etwa lotrecht von der Kernoberfläche abstehende Schweißlasche, die sich jedoch gerade erstreckt und über eine etwa rechtwinklige Kante in die angrenzenden Folienbereiche übergeht. Dadurch kann auch das anschließende Heranfalten dieser Schweißlasche an die betreffenden Stirnseiten des Kerns weitgehend streßfrei und damit ohne Gefahr einer Beschädigung der Metallisierungsschicht durchgeführt werden. Schließlich bereitet es keine Schwierigkeiten, den solchermaßen weitgehend verschlossenen Körper durch einen vorläufig noch unverschlossenen Abschnitt einer Schweißnaht zu evakuieren und sodann diesen noch verbleibenden Schweißabschnitt unter Vakuum zu schließen. Indem solchermaßen alle Schweißlaschen streßfrei an die Kernoberfläche herangefaltet werden, wo sie sodann bspw. adhäsiv fixiert werden können, wird die Gestalt des fertigen Wärmedämmkörpers weitgehend durch die Gestalt des vorgefertigten Kerns definiert. Im Bereich der Stirnseite eines plattenförmigen Wärmedämmkörpers verbleiben keine abstehenden Schweißlaschen, so dass es keine Schwierigkeiten bereitet, derartige Wärmedämmkörper stumpf aneinander zu fügen, wodurch im Bereich zwischen je zwei aneinander gesetzten Wärmedämmkörpern keine Wärmebrücken verbleiben.

Es hat sich als günstig erwiesen, dass der Kern aus einem Pulver gepreßt wird, bspw. aus pyrogener Kieselsäure, oder aus einem offenporigen Kunststoffschaum besteht, bspw. aus Polystyrol oder Polyurethan.

Die Erfindung lässt sich dahingehend weiterbilden, dass der Kern des Wärmedämmkörpers mit einem gasdurchlässigen Filterpapier oder Vlies umwickelt wird, welches beim Evakuieren lose Partikel des Kerns zurückhält. Da sowohl bei gepreßten als auch bei geschäumten Kernen niemals sichergestellt sein kann, dass während der Evakuierungsphase einzelne Partikel oder Flocken aus dem Verbund gelöst und mitgerissen werden, ist eine Vorsichtsmaßnahme zum Sauberhalten der Siegelnähte erforderlich, und hier hat sich eine Umwicklung des Kerns mit einem Papier oder Faservlies bewährt, welches derart herausgelöste Partikel wie in einem Filter festhält.

Wenn der Kern und/oder die Folie vor dem Versiegeln bei Temperaturen um 100 °C bis 200 °C getrocknet wird, so ist sichergestellt, dass keinerlei Feuchtigkeit in dem anschließend evakuierten Kern verbleibt, welche den Gasdruck erhöhen und damit die Dämmfunktion verschlechtern würde. Das Ergebnis ist ein Produkt mit einer höchsten Betriebsdauer. Besteht der Kern aus Kieselsäurepulver, kann im Laufe der Zeit 1 - 3% Feuchtigkeit, die durch die Umhüllung diffundiert, ohne Verschlechterung der Dämmfunktion aufgenommen werden.

Es hat sich bewährt, dass der Kern vor dem Umhüllen mittels der gasdichten Folie durch eine dünne Platte aus bspw. Karton oder durch eine druckbelastbare, offenporige, feuchtigkeitsaufnehmende Platte, bspw. einer bei Temperaturen oberhalb von 100°C getrocknete Holzfaserplatte, abgedeckt wird. Eine derartige Abdeckung bildet einen Schutz des Kerns bei dessen Handhabung während des erfindungsgemäßen Herstellungsverfahrens, und sie gewährleistet außerdem eine glatte Außenfläche des Kerns ohne Erhebungen, welche während des Evakuierungsvorgangs die Umhüllungsfolie durchstoßen oder zumindest deren Metallisierungsschicht verletzen könnten. Eine feuchtigkeitsabsorbierende Platte kann zudem das Puffervermögen eines Pulverkerns in Bezug auf Wasserdampf ergänzen und somit die Nutzungsdauer des Vakuumpaneels verlängern.

Die Erfindung bietet ferner die Möglichkeit, dass der Kern vor dem Umhüllen mittels der gasdichten Folie mit einem Kantenschutz aus einem vergleichsweise harten, insbesondere organischen Werkstoff, z.B. Karton, versehen wird.

Die Erfindung empfiehlt, dass im Rahmen des end-, insbesondere stirnseitigen Zusammenfaltens die an die kürzeren End-, insbesondere Stirnkanten angrenzenden Folienbereiche zuerst nach innen umgefaltet werden. Hierdurch wird die Entstehung seitlicher Überstände über die betreffende Stirnseite vermieden, so dass zum vollständigen Anklappen einer Schweißlasche an die Oberfläche des erfindungsgemäßen Wärmedämmkörpers nur eine einzige Faltung erforderlich ist, wodurch der durch die Herstellung bedingte Streß für die Folie weiter vermindert werden kann.

Sofern die end-, insbesondere stirnseitigen, zusammengefalteten und versiegelten Folienbereiche an die Oberfläche des Kerns herangefaltet werden, wird der erfindungsgemäße Wärmedämmkörper allseitig von ebenen Flächen berandet und kann somit stumpf an benachbarte Stirnseiten angrenzender Wärmedämmkörper herangeschoben werden.

Bevorzugt werden die an die Oberfläche des Kerns herangefalteten Schweißnähte adhäsiv an der darunter befindlichen Folienschicht festgelegt.

Der bis auf eine einzige Öffnung vollständig umhüllte Wärmedämmkörper wird anschließend auf ein partielles Vakuum unterhalb von 100 hPa, vorzugsweise unter 10 hPa, insbesondere unter 1 hPa evakuiert. Dieses starke Vakuum verbessert nicht nur das Wärmeisolationsvermögen eines erfindungsgemäßen Wärmedämmkörpers erheblich, sondern es erhöht auch dessen mechanische Stabilität, da der Kern ständig einer allseitigen Kompression ausgesetzt ist. Gleichzeitig stellt jedoch dieses starke Vakuum eine Herausforderung für das Abdichtungsvermögen der Umhüllungsfolie dar, welcher erst durch das erfindungsgemäße, für die Folie streßfreie Herstellungsverfahren entsprochen werden kann.

Ein nach dem erfindungsgemäßen Verfahren hergestellter, ebenflächig berandeter, im allgemeinen prismatischer, vorzugsweise quaderförmiger, insbesondere plattenförmiger, von einer gasdichten Folie umhüllter und evakuierter Wärmedämmkörper unterscheidet sich von bekannten Wärmedämmkörpern durch die kennzeichnenden Merkmale des nebengeordneten Anspruchs 6. Hierbei ist ein stabiler, aus einem porösen, insbesondere offenporigen Werkstoff vorgeformter Kern von einem einzigen Zuschnittbogen einer gasdichten Folie vollständig umhüllt, wobei zwei Stirnflächen frei von Faltungen und/oder Siegelnähten bleiben.

Die Verwendung eines einzigen Zuschnittbogens hat gegenüber dem aus dem Stand der Technik bekannten, auf zwei taschenförmig zusammengeschweißten Zuschnittbögen basierenden Prinzip den Vorteil, dass eine weitaus bessere Anpassung an unterschiedliche Kernformen möglich ist, und außerdem ist es durch die nachträgliche Umhüllung des Kerns durch den einzigen Folienzuschnitt möglich, den Kern zur Abstützung bei der Faltung zu verwenden und die Folie straff zu ziehen, so dass bei der Schrumpfung des Kerns infolge des Evakuierens nur eine minimale Runzelbildung in der Folie zu befürchten ist. Die allseitige Abstützung an dem Kern erlaubt die Ausbildung weitgehend ebener Mäntel- und Stirnflächen, die sich optimal für das Aneinandersetzen gleichartiger Wärmedämmkörper zur Dämmung größerer Flächen eignen.

Möglichst alle Kanten des Kerns sollten scharfkantig ausgebildet sein mit Kantenradien von weniger als 1 bis 2 mm. Die Erfindung sieht ferner vor, dass bei einer besonderen Ausführungsform alle Umfangs-, insbesondere Mantelseiten des Kerns ausschließlich mit Außenkanten, d.h. Kanten mit konvexer Krümmung, ausgebildet sind.

Eine weitere Optimierung lässt sich dadurch erreichen, dass der Kern derart gestaltet ist, dass die Summe der Flächenwinkel von jeweils zwei an derselben End- oder Stirnfläche benachbarten Ecken 540° beträgt, insbesondere die Summe der Flächenwinkel an einem Eck gleich 270° ist.

Zueinander deckungsgleiche Seiten an gegenüberliegenden Bereichen des Kerns erlauben ein fugenfreies Aneinandersetzen mehrerer Wärmedämmkörper.

In der Praxis haben plattenförmige Kerne die größte Bedeutung, wobei der Abstand zwischen den Plattengrundflächen konstant ist. Dadurch verlaufen die stirnseitigen Schweißlaschen entlang einer Zwischenebene zwischen diesen beiden Plattengrundflächen, und es ergeben sich daher in den Bereich zwischen zwei symmetrisch zu dieser Zwischenebene liegenden Ecken symmetrische Verhältnisse, welche eine gleichförmige Faltung begünstigen.

Es liegt im Rahmen der Erfindung, dass die Plattengrundflächen rechtwinklig sind.

Der Schmelzpunkt des Kerns sollte oberhalb des Schmelzpunktes des versiegelbaren Teils der Folie liegen.

Mit großem Vorteil ist die Folie als Verbundfolie ausgebildet mit einem niedriger schmelzenden Belag an ihrer Innenseite. Hierdurch wird eine Beschädigung des eigentlichen Foliensubstrates während eines Schweißvorganges vermieden. Der niedriger schmelzende Belag wird durch Erwärmen in einen mehr oder weniger flüssigen Zustand versetzt, und durch Zusammenfließen der aufeinandergelegten Schmelzschichten wird einerseits die Oberflächenspannung reduziert und andererseits eine völlige Abdichtung des zu evakuierenden Dämmkörperinhalts erreicht, die infolge ihrer großen Breite jegliche Gasdiffusion praktisch unmöglich macht.

Erfindungsgemäß weist der Folienverbund gasdichte Metallisierungsschichten auf. Hierbei kann es sich bspw. um eine Aluminiumschicht handeln, die eine Dicke von wenigstens einigen Nanometern aufweist. Dadurch ist es möglich, das Foliensubtrat sehr dünn auszubilden, wodurch Faltungen desselben ohne jeglichen Dehnungsstreß vorgenommen werden können. -

Weiterhin ist vorgesehen, dass die straff um den Kern gezogene Folie entlang einer Umfangs-, insbesondere Mantelfläche des Kerns versiegelt ist.

Die erfindungsgemäßen, qualitativ hochwertigen Wärmedämmkörper zeichnen sich dadurch aus, dass die end-, insbesondere stirnseitig über den Kern überstehenden Bereiche des Zuschnitts der gasdichten Folie unter Abdecken der und vollflächigem Anliegen an den end-, insbesondere stirnseitigen Oberfläche(n) des vorgeformten Kerns streßfrei zusammengefaltet sind. Die Möglichkeit eines derartigen, streßfreien Faltens wird im Rahmen der Erfindung dadurch geschaffen, dass die stirnseitigen Folienüberstände vor dem Versiegeln und damit einzeln umgefaltet werden, wobei der Streß erheblich niedriger ist als bei dem gemeinsamen Umfalten im versiegelten Zustand. Auch das nachträgliche Heranklappen der Schweißlasche an die angrenzenden Folienbereiche ist dabei als unkritisch einzustufen, da einerseits die hierzu verwendete Faltkante bei der Bildung der Schweißlasche vor dem Schweißvorgang bereits angelegt wurde und andererseits hierbei ein Folienbereich nur geradegestreckt wird, während der andere Folienteil allenfalls gestaucht wird. Da die betreffende Biegekante bereits vorhanden ist, muss auch der zu streckende Folienteil keinerlei Dehnung ausführen, im Gegensatz zu dem Stand der Technik, wo durch die völlige Neubildung eines Knickes nach dem Versiegeln äußerst ungünstige Kräfteverhältnisse vorherrschen.

Die Schweißnähte sollten im Bereich der End-, insbesondere Stirnseiten etwa parallel zueinander verlaufen, insbesondere etwa parallel zu derjenigen Umfangs-, insbesondere Mantelfläche, an der sich die umfangs-, insbesondere mantelseitige Schweißnaht befindet.

Durch die erfindungsgemäße Faltung laufen im Bereich einer Ecke des vorgeformten Kerns fünf Faltkanten zusammen. Hiervon entsprechen zwei Faltkanten je einer Kante des Kerns im Bereich dieser Ecke, zwei weitere Faltkanten folgen im endgültigen Zustand der dritten Kante in diesem Eckbereich, und die fünfte Faltkante trennt zwei vorzugsweise deckungsgleiche Winkelbereiche, die durch das Wegfalten des überschüssigen Folienbereichs an der betreffenden Ecke bedingt sind.

Die erfindungsgemäße Faltung ist ferner dadurch charakterisiert, dass eine der Faltkanten einen Winkel zwischen 30° und 60°, vorzugsweise von etwa 45° mit wenigstens einer, vorzugsweise zwei benachbarten Faltkante(n) einschließt. Es handelt sich hierbei um die letzte der oben beschriebenen Faltkanten, welche die beiden vorzugsweise identischen Winkel voneinander trennt. Dieser Winkel definiert einen Teil, vorzugsweise die Hälfte des wegzufaltenden Folienbereichs an der betreffenden Ecke und kann daher je nach der Geometrie der betreffenden Ecke in mehr oder weniger großen Grenzen schwanken. Da bei dem erfindungsgemäßen Kern zwei aneinandergrenzende Flächen zwar nicht unbedingt lotrecht aufeinanderstehen müssen, andererseits jedoch zumindest nicht übertrieben spitzwinklig aufeinander treffen sollten, da an derart exponierten Stellen eine Beschädigungsgefahr besonders hoch wäre, bewegt sich der Winkel des wegzufaltenden Folienbereichs in einem mehr oder weniger engen Toleranzbereich, wobei an einer Ecke mit völlig rechtwinklig aufeinander treffenden Kernkanten ein Überlappungswinkel von 45° vorzufinden ist.

Bei Beachtung der obigen Vorschriften für die Folienüberstandsbreite B treffen sich unterhalb einer stirnseitigen Schweißlasche zwei von zwei benachbarten, zu beiden Seiten der Schweißlasche liegenden Ecken ausgehende Faltkanten außerhalb der betreffenden End-, insbesondere Stirnkante.

Auch an dem außerhalb der betreffenden End-, insbesondere Stirnkante liegenden Treffpunkt laufen insgesamt fünf Faltkanten zusammen. Zwei dieser Faltkanten begrenzen das oben beschriebene Faltdreieck, während zwei zueinander vorzugsweise symmetrische Faltlinien jeweils eines über einen Teil dieses Faltdreiecks gefalteten Überlappungsbereich begrenzen, und die letzte dieser Faltkanten verläuft radial durch die angrenzende Schweißlasche nach außen und bildet entweder deren äußere Begrenzungskante oder begrenzt einen durch das Wegfalten bedingten, endseitigen Überlappungsbereich einer Schweißlasche.

Sofern die Faltkanten an den End-, insbesondere Stirnseiten derart verlaufen, dass Folienabschnitte stets mit zwei Innenflächen oder mit zwei Außenflächen aneinanderliegen, kann unbedenklich an jedem gewünschten Pfad eine Schweißnaht angeordnet werden, da alle versiegelbaren Flächen dieses Bereichs stets durch eine ebenfalls versiegelbare Fläche bedeckt sind und somit ein Zusammenfließen der niedrigerschmelzenden Beschichtungen erlauben.

Weitere Vorzüge ergeben sich dadurch, dass die an die kürzeren End-, insbesondere Stirnkanten angrenzenden Folienbereiche zuunterst nach innen umgefaltet sind. Dadurch ist es möglich, die in dem Bereich der darangrenzenden Flächen wegzufaltenden Überstände an die betreffende Stirnfläche heranzufalten, so dass die zu den längeren End- insbesondere Stirnkanten parallele Schweißlasche an diesen kürzeren End- und insbesondere Stirnkanten endet und daher in einem einzigen Arbeitsgang an die betreffende Stirnseite herangeklappt werden kann.

Zum luftdichten Abschluß des folienumhüllten Wärmedämmkörpers an dessen Stirnseiten sind die zusammengefalteten Folienbereiche an den End-, insbesondere Stirnseiten des Kerns versiegelt. Im Gegensatz zum Stand der Technik wird bei der Erfindung mit dem stirnseitigen Versiegeln gewartet, bis die einlagige Folie so weit als möglich an den Kern herangefaltet ist, um den anschließenden Faltungssreß so niedrig als möglich zu halten. Bei einer Ausführungsform, wo die Grundseiten einer flächigen Wärmedämmplatte als Stirnseiten im Rahmen des erfindungsgemäßen Herstellungsverfahrens verwendet werden, können die Stoßfugen an den Schmalseiten einer derartigen Wärmedämmplatte bis auf die einzige, dort verbleibende Mantelschweißnaht völlig faltenfrei gemacht werden, wodurch das Aneinanderfügen gleichförmiger Dämmplatten ohne jegliche Wärmebrücken in den Zwischenbereichen weiter begünstigt wird.

Indem die end-, insbesondere stirnseitigen, zusammengefalteten und versiegelten Folienbereiche an die betreffende End-, insbesondere Stirnseite herangefaltet sind, wird die durch den Kern vorgegebene Gestalt des Wärmedämmkörpers so exakt als möglich approximiert, so dass mit erfindungsgemäßen Wärmedämmkörpern auch eng festgelegte, geometrische Toleranzbereiche eingehalten werden können.

Die Erfindung lässt sich dadurch ergänzen, dass die an die Oberfläche des Kerns herangefalteten Schweißnähte adhäsiv an der darunter befindlichen Folienschicht festgelegt sind.

Die Erfindung erfährt eine vorteilhafte Ausgestaltung dadurch, dass die mantelseitige Schweißnaht aus mehreren Abschnitten gebildet ist, die sich überschneiden und/oder überlappen. Im Rahmen dieses Erfindungsgedankens ist es möglich, die mantelseitige Schweißlasche zunächst nur im Bereich der beiden Stirnseiten des zu umhüllenden Kerns zu versiegeln, ggf. an die Mantelfläche heranzuklappen und evtl. dort adhäsiv zu fixieren, so dass die stirnseitigen Faltungen und Versiegelungen ordnungsgemäß durchgeführt werden können. Etwa in der Mitte der mantelseitigen Schweißnaht verbleibt jedoch eine Öffnung, die zum großflächigen Evakuieren des noch enthaltenen Gasvolumens verwendet werden kann. Innerhalb des Vakuumbehälters kann sodann die verbleibende Öffnung noch vollständig zugeschweißt werden, wobei Überschneidungen und/oder Überlappungen mit den anfänglich hergestellten Teil-Schweißnähten sicherstellen, dass der Innenraum des evakuierten Wärmedämmkörpers hermetisch abgeschlossen ist.

Das partielle Vakuum in dem evakuierten Wärmedämmkörper sollte unterhalb von 100 hPa, vorzugsweise unter 10 hPa, insbesondere bei etwa 1 hPa liegen.

Zur Perfektionierung des erfindungsgemäßen Wärmedämmkörpers kann vorgesehen sein, dass seine Oberfläche mit einer Profilierung, bspw. Riffelung, versehen ist.

Schließlich entspricht es der Lehre der Erfindung, dass wenigstens ein Fortsatz der Folienumhüllung vorgesehen ist, der ein Verschweißen mit einem entsprechenden Fortsatz eines benachbarten Wärmedämmkörpers erlaubt.

Weitere Merkmale, Einzelheiten, Vorteile und Wirkungen der Erfindung ergeben sich aus der folgenden Beschreibung bevorzugter Ausführungsformen der Erfindung sowie anhand der Zeichnung. Hierbei zeigt:

Fig. 1    eine schematische Darstellung einer Anlage zur Herstellung erfindungsgemäßer Wärmedämmkörper;

Fig. 2    das Detail II aus Fig. 1;

Fig. 3    die Schweißvorrichtung aus Fig. 2 während des Schweißvorgangs;

Fig. 4    den Wärmedämmkörper nach Umfalten der gemäß Fig. 3 hergestellten Schweißnaht;

Fig. 5    die Herstellung einer streßfreien, stirnseitigen Faltung bei einer ersten Ausführungsform der Erfindung in einer ersten Faltungsphase;

Fig. 6    eine zweite Phase bei der Faltung nach Fig. 5;

Fig. 7    eine sich anschließende, dritte Phase bei der Faltung nach den Fig. 5 und 6, so dass sich eine aufgerichtete, versiegelbare Lasche ergibt;

Fig. 8    das Umfalten der Schweißlasche aus Fig. 7 im Anschluß an den Schweißvorgang;

Fig. 9    eine andere, erfindungsgemäße Möglichkeit zur Herstellung einer streßfreien, stirnseitigen Faltung in einer Zwischenfaltungsphase, in deren Anschluß sich eine aufgerichtete, versiegelbare Lasche ergibt;

Fig. 10   ein erstes Umfalten der Schweißlasche aus Fig. 9 im Anschluß an den Schweißvorgang;

Fig. 11   ein weiteres Heranfalten eines Teils der Schweißlasche an die Stirnseite des Wärmedämmkörpers;

Fig. 12   den gesamten Wärmedämmkörper in dem Faltungszustand gemäß Fig. 7 oder 9 nach Durchführen der stirnseitigen Versiegelung;

Fig. 13   das Detail XIII aus Fig. 1; sowie

Fig. 14   den fertigen Wärmedämmkörper in der Draufsicht;

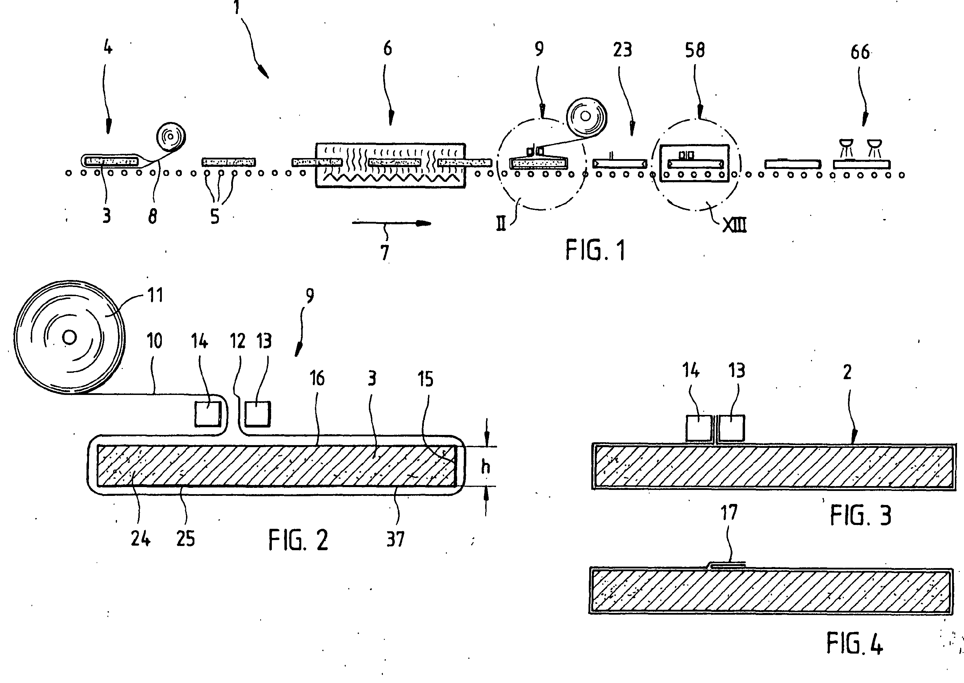

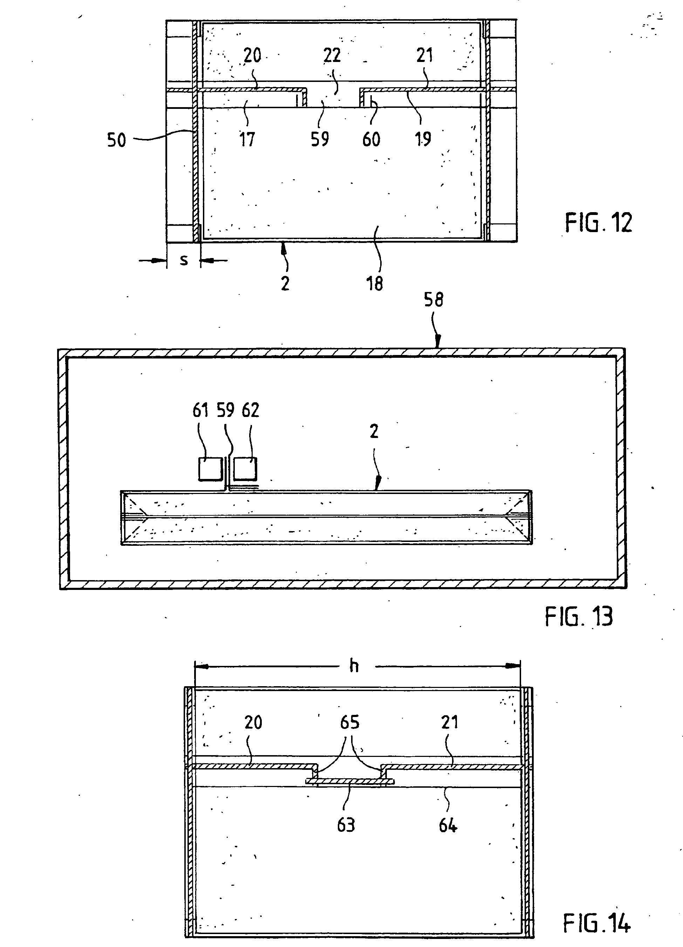

Fig. 1 zeigt in schematischer Ansicht eine nach dem erfindungsgemäßen Verfahren arbeitende Produktionslinie 1 zur Herstellung von Wärmedämmkörpern 2 beispielsweise von der in Fig. 14 in der Draufsicht wiedergegebenen, plattenförmigen Gestalt.

Nicht dargestellt ist ein Formgebungsprozeß, mit dem ein Kern 3 aus einem Pulver, bspw. pyrogener Kieselsäure gepreßt, oder aus einem Kunststoff, bspw. aus Polystyrol oder Polyurethan, geschäumt wird. Dieser Kern-Formling kann bereits die gewünschte Gestalt des herzustellenden Wärmedämmkörpers 2 aufweisen oder zu diesem Zweck noch nachbearbeitet werden, bspw. zersägt oder geschnitten. Die Kernrohlinge sollten möglichst exakt der gewünschten Form des endgültigen Wärmedämmkörpers 2 entsprechen, allenfalls kann eine Schrumpfung während der Evakuierungsphase in der Größenordnung von etwa 5 % durch eine entsprechende Überdimensionierung kompensiert werden.

Von einem Zwischenlager werden die Kernrohlinge 3 entnommen und zunächst in einer ersten Bearbeitungsstation 4 von einem Vlies umhüllt. Dieses hat die Aufgabe, während der späteren Evakuierungsphase evtl. aus dem Kernverbund herausgelöste Partikel zurückzuhalten und dadurch die Nähte sauberzuhalten.

Anschließend wird der Kernrohling 3 von einer Fördereinrichtung 5 zu einer Trocknungsstation 6 transportiert 7. Hier werden die mit dem Vlies 8 umhüllten Kerne 3 auf eine Temperatur zwischen 100° C und 200° C erhitzt, um evtl. noch enthaltene Restfeuchte vollständig auszutreiben. Sodann fahren 7 die vliesumhüllten Kerne 3 zu einer Umhüllungsstation 9, wo die getrockneten Kerne 3 samt ihrer Vliesumhüllung 8 in eine Kunststoffolie 10 eingeschlagen werden. Die Kunststoffolie 10 besteht aus einem Kunststoffsubstrat, das mit einer versiegelbaren Schicht eines niedriger schmelzenden Kunststoffs und zusätzlich mit einer vorzugsweise metallischen Difusionsbarriereschicht versehen ist, die in das Substrat eingebettet und/oder mit einer oder mehreren schützenden Schichten vorzugsweise aus Kunststoff abgedeckt ist. Die Folie 10 ist auf einer Rolle 11 aufgewickelt, und ihre Breite entspricht in dem vorliegenden Fall der Umhüllung eines quaderförmigen Kerns 3 der Summe aus dessen quer zu der Folienbahn 10 gemessener Breite b zuzüglich seiner lotrecht zu der Förderrichtung 7 gemessenen Höhe h zuzüglich zwei mal der für eine Versiegelung erforderlichen Breite einer Schweißlasche s. Andererseits soll eben diese Schweißlaschenbreite s gleich oder kleiner sein als die halbe Höhe h des Kerns 3.

Von dieser sehr langen Folienbahn 10 wird die jeweils vorderste Kante 12 bspw. an einer oberhalb der Fördereinrichtung 5 angeordneten Schweißbacke 13 fixiert. Die andere Schweißbacke 14 und die Folienrolle 11 befindet sich zu diesem Zeitpunkt unterhalb der Fördereinrichtung 5, so dass der weiter bewegte Kern 3 die Folie 10 mit seiner Vorderkante 15 mitnimmt etwa bis in die Position, die in Fig. 2 dargestellt ist. Sodann schwenkt die Schweißbacke 14 durch einen Spalt in der Fördereinrichtung 5, welche bspw. als Rollenbahn ausgebildet sein kann, nach oben, wobei gleichzeitig durch Bremsen der Folienrolle 11 eine verzögerte Folienabgabe 10 erreicht werden kann, so dass diese stets straff gespannt bleibt. Beim Hochschwenken nähert sich die Schweißbacke 14 der feststehenden Schweißbacke 13, und schließlich werden diese beiden Elemente zusammengepreßt, wie dies in Fig. 3 dargestellt ist, und unter thermischer Einwirkung verschmelzen die aneinander liegenden Schweißschichten der Folie 10. Außerhalb der Schweißnaht wird die den Kern 3 umgebende Folie 10 von der restlichen Bahn 10 abgeschnitten.

Als nächstes wird die zunächst noch lotrecht von der oberen Plattengrundfläche 16 abstehende Schweißlasche 17 an die Oberseite 18 des Wärmedämmkörpers 2 herangeklappt, wie dies in Fig. 4 dargestellt ist, und sie kann in dieser Position bspw. mittels eines Heißklebers adhäsiv fixiert werden. In diesem Zusammenhang soll angemerkt werden, dass die Schweißbacken 13, 14 auch derart ausgebildet sein können, dass sich keine durchgehende Schweißnaht ergibt, sondern eine unterbrochene Schweißnaht 19, wie dies in Fig. 12 auf der umgeklappten Schweißlasche 17 dargestellt ist. Dadurch verbleibt zwischen den beiden Schweißabschnitten 20, 21 eine Öffnung 22, durch welche zu einem späteren Zeitpunkt die in dem Kern 3 enthaltene Luft abgesaugt werden kann.

In Förderrichtung 7 schließt sich nun eine weitere Bearbeitungsstation 23 an, in der die Stirnseiten 24 des mantelseitig 25 bereits von der Folie 10 umschlungenen Kerns 3 durch die am Ausgang der Umhüllungsstation 9 seitlich noch überstehenden Folienränder abgedeckt und versiegelt werden.

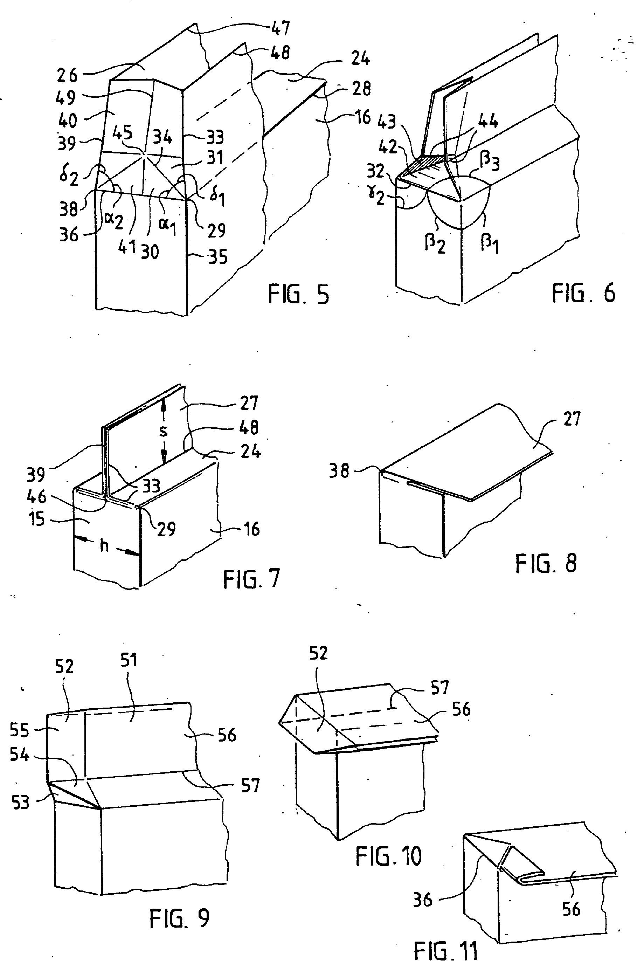

Dieser seitliche Verschluß kann gemäß einer ersten Ausführungsform der Erfindung nach den in den Figuren 5 bis 8 wiedergegebene Verfahrensschritten vollzogen werden. Hierbei wird in einer ersten Phase (Fig. 5 bis 7) der überstehende Randbereich 26 derart zusammengefaltet, dass dieser einerseits die betreffende Stirnfläche 24 vollständig abdeckt und andererseits zu einer etwa lotrecht von dieser wegragenden, ebenen Schweißlasche 27 gefaltet wird. Diese Schweißlasche 27 wird sodann mittels eines nicht wiedergegebenen Verschweißungsgerätes verschlossen, und schließlich wird die Schweißlasche 27 an die Stirnseite 24 herangeklappt, wie dies in Fig. 8 wiedergegeben ist.

Die Erfinder haben herausgefunden, dass zur Ausbildung einer optimalen Abdeckung der Stirnseite 24, d. h. einer wölbungsfreien, planparallelen Anlage der Folie 10, und für die Bildung einer gleichermaßen für den Schweißvorgang gut geeigneten Schweißlasche 27, d. h. einer ebenen Lasche mit einer konstanten Breite, eine bestimmte Faltungsstrategie besondere Vorzüge bietet. Diese ist in den Figuren 5 bis 7 wiedergegeben.

Aus der Fig. 8 erkennt man, dass eine Schweißlasche 27 dann optimal ist, wenn ihre Breite s kleiner ist als die halbe Höhe h des plattenförmigen Wärmedämmkörpers 2, da sie solchenfalls vollständig an die betreffende Stirnseite 24 herangefaltet werden kann und nicht über deren Kante 28 übersteht. Aus demselben Grund ist es wichtig, das die endseitigen Kanten 29 der Schweißlasche 27 nicht über die angrenzende Stirnseite 15 der Wärmedämmplatte 2 überstehen.

Bei der Lösung der solchermaßen definierten Teilaufgabe gingen die Erfinder aus von der Erkenntnis, dass im Bereich jeder Ecke 29 eines insbesondere quaderförmigen Kerns 3 insgesamt drei Seiten 15, 16, 24 aneinander stoßen. Da bei einem Quader jede Ecke einen rechten Winkel darstellt, ist die Summe aller an einer derartigen Ecke 29 zusammenstoßenden Winkel $\beta_1$, $\beta_2$, $\beta_3$ definiert 1:

$$\beta_1 + \beta_2 + \beta_3 = 3 * 90° = 270°.$$

Da andererseits die Folie ihren auf der Ecke 29 liegenden Punkt vollständig und somit entlang eines Kreises von 360° umgibt, verbleibt ein überschüssiger Bereich von 90°, der gemäß der vorliegenden Erfindung weggefaltet wird, damit die Folie 10 nicht bspw. durch Zuschneiden von der rechteckigen Gestalt abweichend bearbeitet werden muss. Dieses Prinzip des Wegfaltens hat den Vorteil, dass sichergestellt ist, dass die Folie an dieser Stelle keinerlei Öffnung erhalten kann, durch welche später Luft in den evakuierten Wärmedämmkörper 2 eindringen könnte.

Das Wegfalten erfolgt dadurch, dass der überschüssige Winkel, der bei einem Quader 90° beträgt, an einer der drei Seiten, im vorliegenden Fall an der Stirnseite 24, durch einen mehrlagigen Bereich der Folie 10 aufgefangen wird. In einem Bereich wird die Stirnseite 24 daher nicht durch eine einzige Folienlage 10, sondern durch eine dreifache Folienlage verdeckt. Die zwei zusätzlichen Folienlagen 30, 31 sind in Fig. 5 anhand der angrenzenden Faltkanten 32 - 34 zu erkennen. Dabei teilt eine mittlere, gegenüber sämtlichen an die Ecke 29 anstoßenden Kanten 28, 35, 36 schräg verlaufende Faltkante 34 den überschüssigen und daher wegzufaltenden Folienbereich 30, 31 in zwei gleichgroße Winkel $\alpha_1$, $\delta_1$, im vorliegenden Fall gilt:

$$\alpha_1 = \delta_1 = 45°.$$

Wie man aus den Figuren 5 bis 8 erkennen kann, ist die Faltung völlig symmetrisch zu einer zwischen den beiden Plattengrundflächen 16, 37 verlaufenden, zu diesen parallelen Mittelebene, so dass an der bezüglich einer dieser Mittelebene lotrecht durchsetzenden Kernkante 36 gegenüberliegenden Ecke 38 des Kerns 3 spiegelbildliche Faltungen auftreten, wobei insbesondere die Faltkante 32 mit der von der ersten, betrachteten Ecke 29 ausgehenden Faltkante zusammenfält. Da die Faltkante 33 im Zustand gemäß Fig. 7 parallel zu der Faltkante 32 bzw. der Kernkante 36 verläuft, muss diese einen rechten Winkel zu der Kernkante 28 einschließen, die wiederum rechtwinklig gegenüber der Kernkante 35 verläuft. Die Faltkante 33 verläuft also - bezogen auf den noch völlig ungefalteten Randüberstand 26 - koaxial zu der Kernkante 35 und damit parallel zu der gegenüberliegenden Faltkante 39. Aufgrund des rechten Winkels $\beta_2$ und des aufgrund der Quaderform des Kerns 3 allseitig gleichgroßen Randüberstandes 26 ergibt sich also zwischen den beiden, die Schweißlasche 27 bildenden Außenfächen ein rechteckiger Folienbereich 40, der möglichst wenig störend zwischen die beiden Schweißlaschendeckflächen hineingefaltet werden muss.

Zu diesem Zweck wird zunächst ein durch die Faltkante 32, die schräge Faltkante 34 und die dazu bezüglich die Kernmittelebene symmetrische Faltkante 41 definierter Dreiecksbereich 42 an die Stirnseite 24 des Kerns 3 herangefaltet, wie dies in Fig. 6 wiedergegeben ist. Über diesen deckt sich einerseits der ebenfalls dreieckige Folienbereich 31 und andererseits der dazu spiegelbildliche Folienbereich 43, derart, dass deren zunächst obere Begrenzungskanten 44 schließlich aneinanderstoßen. Da die Dreiecksbereiche 31, 43 durch die Überlappung jeweils die Dreiecksbereiche 30, 41 abdecken, müssen diese Dreiecke deckungsgleich sein. Da der Winkel an der oberen Spitze 45 des Dreiecksbereichs 42 aufgrund der Winkelsumme im Dreieck 42 im vorliegenden Fall 90° beträgt, müssen die von diesem Punkt 45 ausgehenden Winkel der angrenzenden Dreiecke 31, 41 jeweils 45° sein. Aus diesem Grund verlaufen die Faltkanten 44 - bezogen auf den ursprünglich ungefalteten Zustand des Randbereichs 26 - horizontal bzw. parallel zu der Stirnseite 24. Bei den Dreiecken 30, 31, 41, 43 handelt es sich demnach ausnahmslos um gleichschenklige Dreiecke, und aus diesem Grund gelangen die auf die zunächst vertikalen Faltkanten 33, 39 fallenden Eckpunkte der horizontalen Faltkanten 44 im endgültigen Faltzustand gemäß Fig. 7 auf den Mittelpunkt 46 der Faltkante 32. Der obere Teil des rechtwinkligen Folienbereichs 40 oberhalb dieser Faltkanten 44 faltet sich daher zwanglos und nach Art einer Ziehhamonika zwischen die Deckflächen der Schweißlasche 27, wie dies in den Figuren 6 und 7 wiedergegeben ist. Dabei liegen jeweils stets versiegelbare Folieninnenbereiche aneinander oder metallisierte Folienaußenbereiche, so dass eine vollständige Versiegelung ohne Beeinträchtigung der metallisierten Schicht möglich ist.

Wie man aufgrund weiterer Überlegungen sehen kann, haben verschiedene Geometrieänderungen des Kerns 3 unterschiedliche Auswirkungen auf die Ausbildung der Schweißlasche 27 zur Folge. Es hat sich jedoch gezeigt, dass diese Auswirkungen dann zumindest hinsichtlich der Qualität der Faltung vernachlässigt werden können, wenn die Summe der Seitenwinkel an benachbarten Ecken 29, 38 des Kerns 3 konstant gleich 540° bleibt:

$$\beta_1 + \beta_2 + \beta_3 + \gamma_1 + \gamma_2 + \gamma_3 = 540°.$$

Dadurch bleibt das vorzugsweise nach innen wegzufaltende Dreieck 42 rechtwinklig an seiner Spitze 45, somit verlaufen die von hier ausgehenden Faltkanten 44 in einer gemeinsamen Flucht, demnach steht die Faltkante 49 in dem Zustand gemäß Fig. 7 lotrecht auf der Stirnseite 24, und die dazu im allgemeinen lotrechten Oberkanten 47, 48 des Randbereichs 26 verlaufen parallel zu der Stirnseite 24, was gleichbedeutend mit einer konstanten Schweißlaschenbreite s ist. Eine dieses Ergebnis beeinträchtigende Neigung der Faltkante 49 gegenüber den Oberkanten 47, 48 des Randbereichs 26 kann durch die noch strengere Geometriebedingung

$$\beta_1 + \beta_2 + \beta_3 = \gamma_1 + \gamma_2 + \gamma_3 = 270°$$

des Kerns 3 vermieden werden.

Wie oben ausgeführt, wird bei der Faltung gemäß den Figuren 5 bis 8 der überschüssige Folienbereich 40 zuunterst über die Stirnseite 24 und mit seinem oberen Bereich zwischen die Endbereiche der Schweißlasche 27 gefaltet, so dass nach Herstellen der Schweißnaht 50 nur noch das Umklappen der Schweißlasche 27 um deren Unterkante 48 erforderlich ist.

Bei einer anderen Falttechnik, die in den Figuren 9 bis 11 wiedergegeben ist, werden zunächst die an den Längskanten 28 der Stirnseite 24 überstehenden Folienbereiche 51 an die Stirnseite 24 und dabei unter Ausbildung einer Schweißlasche 56 aufeinander zu gefaltet, und der überschüssige Folienbereich 52 wird über die angrenzende Stirnseite 15 überstehend hinausgefaltet. Das dabei entstehende Dreieck 53 liegt in einer Flucht mit der Stirnseite 24 und wird, wie das Dreieck 42 der zuerst beschriebenen Faltungstechnik von den dortigen Faltungsdreiecken 31, 43, hier von den weiteren Faltungsdreiecken 54 überlappt. An diese oberen Foliendreiecke 54 schließt sich sodann ein vertikaler, doppellagiger Folienbereich 55 an, der eine Verlängerung der Schweißlasche 56 darstellt. Auch hier liegen die Folienbereiche 10 ausschließlich mit versiegelbaren Innenseiten vollflächig aneinander an und können daher bequem versiegelt werden. Ist dies geschehen, so wird die Schweißlasche 56 um ihre Basiskante 57 umgeklappt, wie dies in Fig. 10 wiedergegeben ist, und schließlich wird der durch die seitlichen Überstände 53 - 55 gebildete Bereich 52 um die betreffende Stirnkante 36 des Kerns 3 in Richtung auf die Stirnseite 24 umgefaltet, wie dies in Fig. 11 wiedergegeben ist. Auch hier zeigt sich, dass die obige Bedingung für den Randüberstand B nicht eingehalten wurde und einen zusätzlichen Schneidvorgang erfordert.

Diese letztere Faltungsmethode ist zwar grundsätzlich möglich, wird jedoch von den Erfindern weniger empfohlen, da hierbei die Schweißlasche 56 doppelt umgefaltet werden muss, wodurch die metallisierte Diffusionsbarriereschicht eher der Gefahr einer Beschädigung ausgesetzt werden könnte.

Im Anschluß an den Verfahrensschritt des stirnseitigen Verschließens in der Bearbeitungsstation 23 wird nun der bis auf die Öffnung 22 vollständig von der Folie 10 umhüllte Kern 3 in ein evakuierbares Gefäß 58 gelegt, und zwar derart, dass der die Öffnung 22 aufweisende Bereich 59 der mantelseitigen Schweißlasche 17 etwa lotrecht gegenüber der betreffenden Plattengrundfläche 16 aufgerichtet wird, wie dies in Fig. 13 wiedergegeben ist. Dies kann bspw. dadurch geschehen, dass der aufzurichtende Bereich 59 der Schweißlasche 17 durch kurze Einschnitte 60 von den benachbarten, bereits versiegelten Abschnitten 20, 21 getrennt und sodann unter Ausbildung einer zusätzlichen Falte nach oben gebogen wird. Dieser die Öffnung 22 aufweisende Bereich 59 wird zwischen zwei Schweißbacken 62 plaziert, die jedoch noch nicht zusammengefahren werden. Vielmehr wird anschließend das Gefäß 58 verschlossen und auf einen Druck zwischen etwa 0,1 und 1 hPa evakuiert. Sodann wird ein Zeitraum von bspw. 20 - 120 Sekunden abgewartet, damit die in dem Kern 3 zunächst enthaltene Luft Gelegenheit erhält, um infolge der Druckdifferenz gegenüber dem Vakuum an der Öffnung 22 auszutreten.

Sobald der Druckausgleich stattgefunden hat und der Kern 3 ebenfalls evakuiert ist, werden die beiden Schweißbacken 61, 62 ferngesteuert zusammengefahren, und der Schweißvorgang wird aktiviert. Damit wird eine weitere Schweißnaht 63 erzeugt, die parallel zu den ersten beiden Schweißabschnitten 20, 21 verläuft, jedoch vorzugsweise in Richtung zu der freien Kante 64 der mantelseitigen Schweißlasche 17 versetzt ist.

Da bei Herstellen der ursprünglichen Schweißabschnitte 20, 21 an den Rändern der verbleibenden Öffnung 22 mittels etwa lotrecht zu der Längsrichtung der Schweißlasche 17 verlaufender und bis zu der Kante 62 reichender Schweißnähte 65 die Öffnung 22 über nahezu die gesamte Breitenerstreckung der Schweißlasche 17 abgegrenzt worden ist, kann bei der abschließenden Versiegelung 63 bequem eine Überkreuzung mit den die Öffnungsränder bildenden, lotrechten Schweißnähten 65 erreicht werden, so dass eine absolut dichte Versiegelung des Wärmedämmkörpers 2 garantiert ist.

Schließlich wird auch der die ursprüngliche Öffnung 22 enthaltende Laschenbereich 59 an die betreffende Flachseite 16 des Wärmedämmkörpers 2 herangefaltet und dort mittels eines Heißklebers fixiert. Der Wärmedämmkörper 2 ist damit fertiggestellt und kann an einer Prüfungsstation 66 einer Qualitätsprüfung unterzogen werden.

Andererseits kann anstelle der Evakuierung über eine Öffnung 22 in der mantelseitigen Schweißnaht auch eine Evakuierung über eine der stirnseitigen Schweißnähte erfolgen, indem hier zunächst nur die beiden Eckbereiche versiegelt werden und erst unter Vakuum der verbleibende Mittelbereich.

**Patentansprüche**

1. Verfahren zur Herstellung eines ebenflächig berandeten, im allgemeinen prismatischen, vorzugsweise quaderförmigen, insbesondere plattenförmigen, von einer gasdichten Folie (10) umhüllten und evakuierten Wärmedämmkörpers (2), **gekennzeichnet durch** folgende Schritte:

   a) Herstellen eines der gewünschten Gestalt des Wärmedämmkörpers (2) entsprechenden, ebenflächig berandeten Kerns (3) aus einem porösen, insbesondere offenporigen Werkstoff;
   b) Umhüllen dieses Kerns (3) entlang eines Umfangs, insbesondere entlang seines Mantels (25), mit einem einzigen Bogen der gasdichten Folie (10);
   c) wenigstens teilweises Versiegeln (20, 21) bzw. Verschweißen der straff um den Kern (3) gezogenen Folie (10) entlang einer Umfangs-, insbesondere Mantelfläche (16) des Kerns (3);
   d) Heranfalten des Schweißnahtbereichs (17) der Folie (10) an die betreffende Umfangs-, insbesondere Mantelfläche (16) des Kerns (3);
   e) nahezu spannungs- und zugfreies Zusammenfalten der zu beiden Seiten des abgedeckten Kernumfangs (25), insbesondere stirnseitig (24) über den Kern (3) überstehenden Bereiche (26, 51) des Zuschnitts der gasdichten Folie (10) unter Abdecken und vollflächigem Anlegen an den verbleibenden, insbesondere stirnseitigen Kernoberfläche(n) (24);
   f) Versiegeln bzw. Verschweißen der zusammengefalteten Folienbereiche (27, 56) an wenigstens einer End-, insbesondere Stirnseite (24) des Kerns (3);
   g) Evakuieren (58) des folienumhüllten Kerns (3);
   h) vollständiges Versiegeln (50) bzw. Verschweißen sämtlicher verbliebener Öffnungen (22) der Folie (10) unter Vakuum (58).

2. Verfahren nach Anspruch 1, **dadurch gekennzeichnet, dass** der Kern (3) des Wärmedämmkörpers (2) mit einem luftdurchlässigen, folienförmigen Material (z.B. Faservlies, Filterpapier) (8) umwickelt wird, welches beim Evakuieren (58) lose Partikel des Kerns (3) zurückhält, und/oder vor dem Umhüllen (9) mittels der gasdichten Folie (10) durch eine dünne Platte aus bspw. Karton und/oder Holzfaser abgedeckt wird.

3. Verfahren nach einem der vorhergehenden Ansprüche, **dadurch gekennzeichnet, dass** der Kern (3), das Vlies (8) und/oder die Folie (10) vor dem Versiegeln (9) getrocknet wird.

4. Verfahren nach einem der vorhergehenden Ansprüche, **dadurch gekennzeichnet, dass** der Wärmedämmkörper (2) auf ein partielles Vakuum unterhalb von 100 hPa, vorzugsweise unter 10 hPa, insbesondere unter 1 hPa evakuiert (58) wird.

5. Verfahren nach einem der vorhergehenden Ansprüche, **dadurch gekennzeichnet, dass** die end-, insbesondere stirnseitigen, zusammengefalteten und versiegelten Folienbereiche (27, 56) an die Oberfläche (24) des Kerns (3) herangefaltet und ggf. adhäsiv an der darunter befindlichen Folienschicht (10) festgelegt werden.

6. Ebenflächig berandeter, im allgemeinen prismatischer, vorzugsweise quaderförmiger, insbesondere plattenförmiger, von einer gasdichten Folie (10) umhüllter und evakuierter Wärmedämmkörper (2), **gekennzeichnet durch** folgende Merkmale:

   a) einen stabilen, aus einem porösen, insbesondere offenporigen Werkstoff vorgeformten, ebenflächig berandeten Kern (3) mit der gewünschten Gestalt des Wärmedämmkörpers (2),
   b) der von einem einzigen Zuschnittbogen der gasdichten Folie (10) vollständig umhüllt ist;
   c) wobei die straff um den Kern (3) gezogene Folie (10) entlang einer Umfangs-, insbesondere Mantelfläche (16) des Kerns (3) versiegelt ist;
   d) und wobei der umfangs-, insbesondere mantelseitige Schweißnahtbereich (17) der Folie (10) an die betreffende Mantelfläche (16) des Kerns (3) herangefaltet ist;
   e) wobei die endseitig, insbesondere stirnseitig über den Kern (3) überstehenden Bereiche (26, 51) des Zuschnitts der gasdichten Folie (10) unter Abdecken der und vollflächigem Anliegen an den end-, insbesondere stirnseitigen Oberfläche(n) (24) des vorgeformten Kerns (3) nahezu spannungs- und zugfrei zusammengefaltet sind;
   f) wobei die zusammengefalteten Folienbereiche (27, 56) an den End-, insbesondere Stirnseiten (24) des Kerns (3) versiegelt sind;
   g) wobei der Wärmedämmkörper (2) evakuiert ist;
   h) und wobei sämtliche Öffnungen (22) der Folie (10) unter Vakuum (58) vollständig versiegelt sind.

7. Wärmedämmkörper nach Anspruch 6, **dadurch gekennzeichnet, dass** der entlang einer Plattengrundfläche (16) des Kerns (39) verlaufende Schweißnahtbereich (17) der Folie (10) an die betreffende Plattengrundfläche (16) des Kerns (3) herangefaltet ist.

8. Wärmedämmkörper nach einem der Ansprüche 6 oder 7, **dadurch gekennzeichnet, dass** im Bereich einer Ecke (29, 38) des vorgeformten Kerns (3) fünf Faltkanten (32 - 34) zusammenlaufen.

9. Wärmedämmkörper nach einem der Ansprüche 6 bis 8, **dadurch gekennzeichnet, dass** die Faltkanten (32 - 34, 44, 49) an den End-, insbesondere Stirnseiten (24) derart verlaufen, dass Folienabschnitte (10) stets mit zwei Innenflächen oder mit zwei Außenflächen aneinanderliegen.

**Claims**

1. Process for manufacturing a flat-sided, generally prismatic, in particular parallelepipedal, especially panel-formed thermal insulation element (2), which is enveloped in a gas-tight foil (10) and evacuated, **characterized by** the following steps:

   a) Manufacture of a flat-sided core (3) corresponding to the desired form of the thermal insulation element (2) from a porous, especially open-pored material;
   b) enveloping of this core (3) around its outer surface, especially around its lateral surface (25), with a single sheet of the gas-tight foil (10);
   c) at least partial sealing (20, 21) or welding together of the foil (10), which is drawn tightly around the core (3), along a surface of the core (3), especially along its lateral surface (25);
   d) folding of the welded seam area (17) of the foil (10) against the relevant outer surface of the core (3), especially against a lateral surface (16);
   e) virtually tension- and stress-free folding-together of the areas (26, 51) of the cut sheet of gas-tight foil (10) projecting beyond the core (3), especially at the end faces (24), covering and in flat contact with the remaining surface(s) of the core (24), especially end surfaces;
   f) sealing or welding together of the folded-together foil areas (27, 56) on at least one end face (24) of the core (3);
   g) evacuation of the foil-enveloped core (3);
   h) complete sealing (50) or welding together of all remaining openings (22) in the foil (10) under vacuum (58).

2. Process according to claim 1, **characterized in that** the core (3) of the thermal insulation element (2) is enveloped in an air-permeable, foil-formed material (e.g. fiber felt, filter paper) (8), which retains loose particles of the core (3) during evacuation (58), and/or is covered with a thin panel of cardboard and/or wood fiber, for example, before being enveloped in the gas-tight foil (10).

3. Process according to one of the preceding claims, **characterized in that** the core (3), the felt (8) and/or the foil (10) is dried before sealing (9).

4. Process according to one of the preceding claims, **characterized in that** the thermal insulation element (2) is evacuated to a partial vacuum below 100 hPa, preferably below 10 hPa, especially below 1 hPa (58).

5. Process according to one of the preceding claims, **characterized in that** the areas of foil (27, 56) which are folded together and sealed, especially on the end faces, are folded against the surface (24) of the core (3) and possibly fixed adhesively to the underlying foil layer (10).

6. Flat-sided, generally prismatic, in particular parallelepipedal, especially panel-formed thermal insulation element (2), which is enveloped in a gas-tight foil (10) and evacuated, **characterized by** the following features:

   a) A stable, flat-sided core (3) corresponding to the desired form of the thermal insulation element (2), made from a porous, especially open-pored material,
   b) which is enveloped by a single sheet of the gas-tight foil (10);
   c) whereby the foil (10), which is drawn tightly around the core (3), is sealed along a surface of the core (3), especially along its lateral surface (25);
   d) and whereby the welded seam (17) of the foil (10) in the area of a surface, especially the lateral surface, is folded against the relevant outer surface of the core (3);
   e) whereby the areas (26, 51) of the cut sheet of gas-tight foil (10) projecting beyond the core (3), especially at the end faces (24), are folded together in a nearly tension- and stress-free manner, under covering and in flat contact with the remaining surface(s) of the core (24), especially end surfaces;
   f) whereby the folded-together foil areas (27, 56) are sealed on at least the end faces (24) of the core (3);
   g) whereby the thermal insulation element (2) is evacuated;
   h) and whereby all remaining openings (22) in the foil (10) are entirely sealed under vacuum (58).

7. Thermal insulation element according to claim 6, **characterized in that** the welded seam area (17) of the foil (10) running along the base (16) of the panel is folded against the relevant base (16) of the panel core (3).

8. Thermal insulation element according to claim 6 or 7, **characterized in that** five fold lines (32 - 34) converge in the area of a corner (29, 38) of the preformed core (3).

9. Thermal insulation element according to one of claims 6 to 8, **characterized in that** the fold lines (32 - 34, 44, 49) on the end faces run in such a way that sections of foil (10) always have two inner surfaces or two outer surfaces lying in contact.

**Revendications**

1. Procédé pour la fabrication d'un corps thermo-isolant (2) avec entourage plan, en général prismatique, de préférence parallélépipédique, en particulier de forme plate, enveloppé et mis sous vide au moyen d'un film étanche au gaz (10), **caractérisé par** les étapes suivantes :

   a) réalisation d'un noyau (3) en matériau poreux, en particulier à pores ouverts, avec entourage plan correspondant à la forme souhaitée du corps thermo-isolant (2) ;
   b) enrobage de ce noyau (3) sur la longueur d'un périmètre, en particulier sur la longueur de son enveloppe (25), avec une seule feuille du film étanche au gaz (10) ;
   c) scellement tout au moins partiel (20, 21) ou soudage du film (10) fortement tendu autour du noyau (3) sur la longueur d'une surface périphérique, en particulier d'une face d'enveloppe (16) du noyau (3) ;
   d) pliage de la zone du cordon de soudure (17) du film (10) au niveau de la surface périphérique correspondante, en particulier de la face d'enveloppe (16) du noyau (3) ;
   e) pliage pratiquement sans tension et sans traction des parties (26, 51) dépassant du noyau (3), des deux côtés du pourtour du noyau (25) couvert, en particulier de la face frontale (24), de la découpe du film étanche au gaz (10) par recouvrement et application sur toute la surface de la/des face(s) supérieure(s) de noyau (24) restante(s), en particulier de la/des face(s) frontale(s) ;
   f) scellement ou soudage des zones de film pliées (27, 56) au moins à une extrémité, en particulier sur une face frontale (24) du noyau (3) ;
   g) évacuation (58) du noyau (3) recouvert du film ;
   h) scellement intégral (50) ou soudage de toutes les ouvertures restantes (22) du film (10) sous vide (58).

2. Procédé selon la revendication 1, **caractérisé en ce que** le noyau (3) du corps thermo-isolant (2) est enveloppé d'un matériau en forme de feuille perméable à l'air (non-tissé, papier filtre par ex.) (8), lequel retient les particules libres du noyau (3) à génération du vide (58), et/ou recouvert avant enveloppement (9) au moyen du film étanche au gaz (10) par une plaque mince en carton par ex. et/ou fibre de bois.

3. Procédé selon l'une des revendications précédentes, **caractérisé en ce que** le noyau (3), le non-tissé (8) et/ou le film (10) est séché avant scellement (9).

4. Procédé selon l'une des revendications précédentes, **caractérisé en ce que** le corps thermo-isolant (2) est évacué (58) à un vide partiel inférieur à 100 hPa, de préférence inférieur à 10 hPa, en particulier inférieur à 1 hPa.

5. Procédé selon l'une des revendications précédentes, **caractérisé en ce que** les zones de film (27, 56) pliées et scellées aux extrémités, en particulier sur les faces frontales, sont pliées au niveau de la surface (24) du noyau (3) et éventuellement adhèrent à la couche de film (10) sous-jacente.

6. Corps thermo-isolant (2) avec entourage plan, en général prismatique, de préférence parallélépipédique, en particulier de forme plate, enveloppé et mis sous vide au moyen d'un film étanche au gaz (10), **caractérisé par** les particularités suivantes :

   a) un noyau (3) stable en matériau poreux, en particulier à pores ouverts, avec entourage plan, préformé à la forme souhaitée du corps thermo-isolant (2),
   b) qui est entièrement enveloppé d'une seule feuille de coupe du film étanche au gaz (10) ;
   c) le film (10) tendu fortement autour du noyau (3) étant scellé sur la longueur d'une surface périphérique, en particulier d'une face d'enveloppe (16) du noyau (3) ;
   d) et la zone de cordon de soudure (17) sur le pourtour, en particulier côté enveloppe, du film (10) étant pliée au niveau de la face d'enveloppe (16) correspondante du noyau (3) ;
   e) les parties (26, 51) dépassant du noyau (3) aux extrémités, en particulier sur la face frontale, de la découpe du film étanche au gaz (10) par recouvrement et application sur toute la surface de la/des face(s) supérieure(s) (24) à une/aux extrémité(s), en particulier sur une/des face(s) frontales du noyau préformé (3) étant pliées pratiquement sans tension et sans traction ;
   f) les zones de film (27, 56) pliées étant scellées aux extrémités, en particulier sur les faces frontales (24) du noyau (3) ;
g) le corps thermo-isolant (2) étant évacué ;
h) et toutes les ouvertures (22) du film (10) étant scellées intégralement sous vide (58).

7. Corps thermo-isolant selon la revendication 6, **caractérisé en ce que** la zone de cordon de soudure (17) du film (10) allant sur la longueur d'une surface de base de la plaque (16) du noyau (39) est pliée au niveau de la surface de base de la plaque (16) correspondante.

8. Corps thermo-isolant selon l'une des revendications 6 ou 7, **caractérisé en ce que** cinq arêtes de pliage (32 - 34) se rejoignent dans la zone d'un angle (29, 38) du noyau (3) préformé.

9. Corps thermo-isolant selon l'une des revendications 6 à 8, **caractérisé en ce que** les arêtes de pliage (32 - 34, 44, 49) s'étendent aux extrémités, en particulier aux faces frontales (24) de façon telle que les segments de film (10) sont toujours juxtaposés aux deux faces intérieures ou aux deux faces extérieures.

FIG. 1

FIG. 2

FIG. 3

FIG. 4

FIG. 5

FIG. 6

FIG. 7

FIG. 8

FIG. 9

FIG. 10

FIG. 11

**FIG.12**

**FIG.13**

**FIG.14**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9829309 A
- GB 2336565 A